(19) Europäisches Patentamt

European Patent Office

Office européen des brevets

(11) Veröffentlichungsnummer: **0 472 889 A1**

## (12) EUROPÄISCHE PATENTANMELDUNG

(21) Anmeldenummer: **91112086.3**

(22) Anmeldetag: **19.07.91**

(51) Int. Cl.⁵: **B23Q 5/26**, F16F 9/02

(30) Priorität: **25.08.90 DE 4026941**

(43) Veröffentlichungstag der Anmeldung:
**04.03.92 Patentblatt 92/10**

(84) Benannte Vertragsstaaten:
**DE ES FR GB IT**

(71) Anmelder: **AUGUST LÄPPLE GmbH & Co. KG
Werkzeugbau, Press- und Stanzwerk
Austrasse 88
W-7100 Heilbronn(DE)**

(72) Erfinder: **Haas, Eberhard
Beethovenstrasse 4
W-7104 Obersulm-Willsbach(DE)**

(74) Vertreter: **Abel, Martin, Dipl.-Ing. et al
Patentanwälte Dipl.-Ing. R. Magenbauer,
Dipl.-Phys. Dr. O. Reimold, Dipl.-Phys. Dr. H.
Vetter, Dipl.-Ing. M. Abel, Hölderlinweg 58
W-7300 Esslingen(DE)**

(54) **Haltevorrichtung.**

㊷ Es handelt sich um eine Haltevorrichtung (1) für einen insbesondere als Abtastkopf ausgebildeten anhebbaren und absenkbaren Arbeitskopf (11). Es ist ein Halteteil (20) vorhanden, an dem sich ein höhenverstellbares Führungsteil (17) abstützt, das den Arbeitskopf (11) trägt. Das Führungsteil (17) besitzt ein Gehäuse (18) mit einem Abstützraum (23).Der Abstützraum (23) ist einerseits von einer gehäusefesten Wand (24) und andererseits von einer Abschlußwand (21) begrenzt, wobei letztere zum Halteteil (20) gehört und an einer Verbindungsstange (25) sitzt, die aus dem Gehäuse (18) herausragt. Wird das Führungsteil (17) verschoben, so ändert sich das Volumen des Abstützraumes (23), der dauernd mit einer Druckmittelquelle (32) kommuniziert. Im Bereich zwischen der Abschlußwand (21) und der diese umgebenden Gehäusepartie befindet sich ein Druckmittel-Durchlaßspalt (33). Auf diese Weise läßt sich eine stabile Gleichgewichtslage des Führungsteils (17) einstellen, das dazuhin praktisch reibungsfrei in Höhenrichtung verstellbar ist.

Fig. 1

EP 0 472 889 A1

Die Erfindung betrifft eine Haltevorrichtung für einen insbesondere als Abtastkopf ausgebildeten, anhebbaren und absenkbaren Arbeitskopf.

Im Formenbau werden die für eine herzustellende Form erforderlichen Maße häufig von Modellen des später herzustellenden Werkstückes abgenommen. Üblich ist außerdem die Maßkontrolle von mit angefertigten Formen hergestellten Werkstücken, um die Formqualität überprüfen zu können. In all diesen Fällen wird regelmäßig eine Vorrichtung verwendet, die einen Abtastkopf trägt, mit dem sich eine Modell - oder Werkstückoberfläche zur Datenerfassung abtasten läßt. Der Abtastkopf ist hierbei an einer Haltevorrichtung angebracht, die ein Anheben und Absenken erlaubt und üblicherweise noch mit weiteren Bewegungsfreiheitsgraden ausgestattet ist. Wegen des regelmäßig hohen Gewichts des Abtastkopfes erfolgen der Hubantrieb wie auch die weiteren Bewegungsantriebe bisher motorisch, was einerseits einen großen baulichen Aufwand erfordert und andererseits die Handhabung insbesondere für Nicht-Spezialisten sehr erschwert.

Das Ziel der Erfindung besteht deshalb darin, eine Haltevorrichtung zu schaffen, die bei einfacherem, kostengünstigerem Aufbau eine erheblich einfachere Handhabung des Abtastkopfes oder sonstigen an dessen Stelle gesetzten Arbeitskopfes erlaubt.

Dieses Ziel wird dadurch erreicht, daß ein Halteteil vorhanden ist, an dem sich ein höhenverstellbares Führungsteil zum Erhalt stabiler Höhenlagen abstützen kann, von dem der Arbeitskopf in Gebrauchsstellung getragen wird, daß eines der beiden Teile ein Gehäuse umfaßt, das einen sich in Verstellrichtung erstreckenden Abstützraum enthält, der mit als Abstützmedium dienendem Druckmittel befüllbar ist und einerseits von einer gehäusefesten Wand und andererseits von einer Abschlußwand begrenzt wird, wobei die Abschlußwand Bestandteil des anderen Teils ist und von einer den Abstützraum und die gehäusefeste Wand durchquerenden Verbindungsstange getragen wird, deren aus dem Gehäuse herausragender Stangenabschnitt zur Verbindung mit dem Arbeitskopf oder einer Halterung dient, und wobei durch in Verstellrichtung erfolgende Relativbewegung zwischen den beiden Teilen eine Längen- und Volumenänderung des ständig mit einer Druckmittelquelle kommunizierenden Abstützraumes stattfindet, und daß im Bereich zwischen der Abschlußwand und der diese seitlich umgebenden Gehäusepartie ein umlaufender, drosselnd wirkender Druckmittel-Durchlaßspalt vorhanden ist.

Auf diese Weise liegt eine Haltevorrichtung vor, die eine manuelle Führung des Arbeitskopfes mit geringstem Kraftaufwand ermöglicht. Antriebsmotoren erübrigen sich, so daß der gesamte Aufbau hinsichtlich des Bauvolumens und seiner Herstellungskosten erheblich reduziert ist. Auf Grund des erfindungsgemäßen Aufbaus ist das den Arbeitskopf tragende Führungsteil in jeder manuell eingestellten Höhenlage stabilisiert, weil es sich unter Vermittlung des als Abstützmedium dienenden, im Abstützraum befindlichen Druckmittels gegenüber dem in Höhenrichtung ortsfest festgelegten Halteteil abstützen kann. Durch die ständige Verbindung mit einer Druckmittelquelle ist der Abstützraum dauernd mit Druckmittel gefüllt, wobei über den als Drosselstelle fungierenden Druckmittel-Durchlaßspalt laufend eine gewisse Druckmittelmenge abströmt, die kontinuierlich nachgefüllt wird. Der im Abstützraum herrschende Überdruck bewirkt die jeweilige Lagestabilisierung. Gleichzeitig ist ein Berührungskontakt zwischen der Abschlußwand und dem Gehäuse ausgeschlossen, so daß die Verstellbewegung des Führungsteils äußerst reibungsarm vonstatten geht. Mangels Dichtungen im Bereich des Durchlaßspaltes ist ein Anhaften zwischen den relativ zueinander bewegten Teilen ausgeschlossen. Das Führungsteil ist jedoch zweckmäßigerweise mittels geeigneter Führungseinrichtungen bewegbar abgestützt, die insbesondere am Außenumfang angeordnet werden können.

Gegenüber dem Stand der Technik bietet die erfindungsgemäße Haltevorrichtung durch leichtgängige Verstellbarkeit einfache Bedienmöglichkeiten von Hand bei gleichzeitig optimaler Zugänglichkeit. Selbst wenn großflächige Werkzeuge abgetastet werden müssen, ist die Meß- und Wiederholungsgenauigkeit sehr groß. Die Erfassungszeiten sind kurz, die Meßwerterfassung und -verarbeitung problemlos. Die Haltevorrichtung läßt sich auch in Zusammenhang mit anderen Arbeitsköpfen als Abtastköpfen verwenden, z.B. mit einem Anreißkopf.

Vorteilhafte Weiterbildungen der Erfindung sind in den Unteransprüchen aufgeführt.

Vorzugsweise wird der das Gehäuse umfassende Teil als Führungsteil verwendet, der insbesondere in seinem unteren Bereich den jeweiligen Arbeitskopf tragen kann. In diesem Falle wird das Halteteil von der aus Verbindungsstange und Abschlußwand bestehenden Einheit gebildet, wobei die Verbindungsstange vertikal nach oben aus dem Gehäuse herausragt und mit dem herausragenden Abschnitt in Vertikalrichtung unbewegbar festgelegt ist. Als Gehäuse wird insbesondere ein Rohr verwendet.

Um die Gleichgewichtslage insbesondere bei wechselnden Arbeitsköpfen genau einstellen zu können, ist in die Druckmittelverbindung zwischen Druckmittelquelle und Abstützraum zweckmäßigerweise eine einstellbare Drosseleinrichtung zwischengeschaltet. Es ist ferner von Vorteil, wenn der Abstützraum parallel zur Druckmittelquelle mit einem großvolumigen Druckspeicher in Verbindung steht, der bei rascher Vergrößerung des Abstützraumes infolge schnellen Hochfahrens des Arbeitskopfes ein praktisch verzögerungsfreies Nachfüllen des Abstützraumes bewirkt. Um auch bei rascher entgegengesetzter Bewegungsrichtung die zu überwindenden Gegenkräfte geringstmöglich zu halten, kommuniziert der Abstützraum zweckmäßigerweise auch mit einem Überdruckventil, das bei zu starker Kompression des Abstützmediums eine vorübergehende Entlastung durch kurzzeitiges Belüften bewirkt.

Auch in dem von der Verbindungsstange durchdrungenen Bereich der gehäusefesten Wand ist zweckmäßigerweise um die Verbindungsstange herum ein umlaufender Durchlaßspalt für Druckmedium vorhanden, so daß keine Reibung entsteht. Durch diesen Spalt kann Druckmittel unter Umständen ebenfalls gedrosselt abströmen mit der gleichen Wirkung wie beim ringsumlaufenden Druckmittel-Durchlaßspalt am Umfang der Abschlußwand.

Die Druckmittelzufuhr in den Abstützraum läßt sich besonders vorteilhaft über die mit einem entsprechenden internen Kanal versehene Verbindungsstange bewerkstelligen. In diesem Falle erübrigen sich am Führungsteil angeordnete mitzubewegende Druckmittelleitungen.

Nachfolgend wird die Erfindung anhand der in der Zeichnung dargestellten Ausführungsbeispiele näher erläutert. Im einzelnen zeigen:

Fig. 1 eine erste Bauform der erfindungsgemäßen Haltevorrichtung als Bestandteil einer Mehrkoordinatenmaschine in bevorzugter Portalbauweise in Vorderansicht und stark schematisiert und

Fig. 2 den bevorzugt ausgestalteten Durchdringungsbereich zwischen der Verbindungsstange und dem Gehäuse einer weiteren Ausführungsform der Haltevorrichtung.

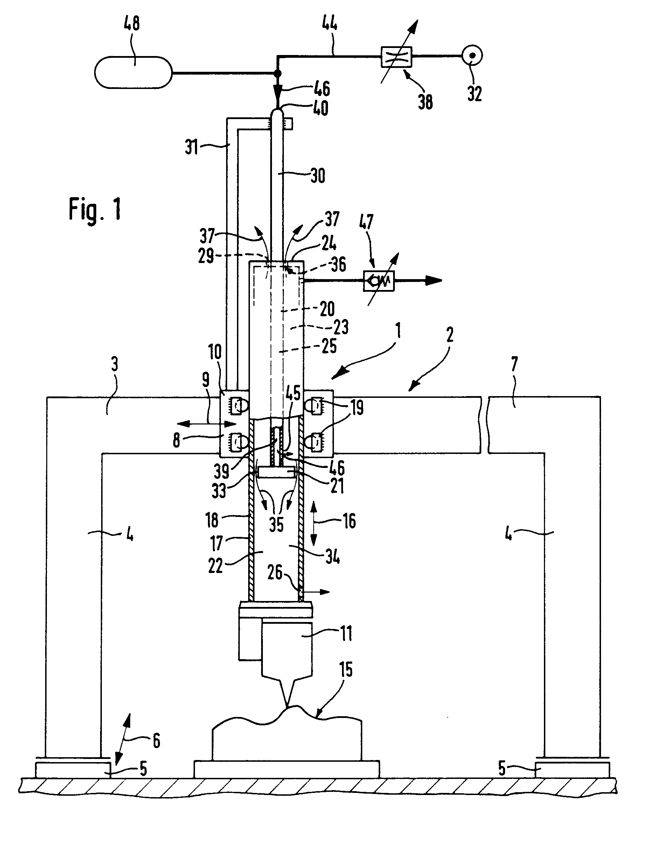

Die in Fig. 1 abgebildete Haltevorrichtung 1 ist an einer Mehrkoordinatenmaschine 2 angebracht, in Zusammenhang mit der sie bevorzugt eingesetzt wird. Diese Maschine hat ein U-förmiges Portal 3, das mit den Endbereichen der beiden vertikalen Säulenteile 4 auf einer Unterlage 5 in einer ersten Koordinatenrichtung 6 horizontal bewegbar geführt ist. Die Säulenteile 4 laufen zweckmäßigerweise auf Luftpolstern, so daß die gesamte Anordnung leicht von Hand verschiebbar ist. Am oberen Querträger 7 des Portals 3 ist ein Schlitten 8 rechtwinkelig zur ersten Koordinatenrichtung 6 in einer zweiten Koordinatenrichtung 9 horizontal hin und her bewegbar geführt. Auch hierbei wird bevorzugt eine das manuelle Verschieben erleichternde Luftlagerung verwendet.

Der Schlitten 8 bildet das Lagerungsteil 10 der Haltevorrichtung 1. An dieser ist im unteren Bereich ein Arbeitskopf 11 angeordnet, bei dem es sich beispielsweise wie abgebildet um einen Abtastkopf handelt. Mit ihm läßt sich die Oberfläche 15 eines beliebigen unterhalb angeordneten Gegenstands abtasten bzw. abfahren, um mittels nicht näher dargestellter meßtechnischer Einrichtungen eine meßtechnische Erfassung der Oberflächenkontur vorzunehmen. Die hierbei erforderliche, gemäß Doppelpfeil 16 angedeutete vertikale Bewegungsmöglichkeit gemäß der dritten Koordinatenrichtung wird hierbei von der erfindungsgemäßen Haltevorrichtung gewährleistet. Sie gestattet trotz des relativ hohen Gewichtes des Arbeitskopfes 11 ein leichtgängiges Anheben und/oder Absenken des Arbeitskopfes 11 von Hand, wobei in jeder Höhenlage eine automatische Gewichtsaustarierung stattfindet, so daß der Arbeitskopf 11 beim Loslassen in der jeweils augenblicklichen Position verharrt.

Die Haltevorrichtung 1 verfügt über ein Führungsteil 17, das ein sich in vertikaler Verstellrichtung 16 erstreckendes Gehäuse 18 umfaßt. Beim Ausführungsbeispiel ist dieses Führungsteil 17 praktisch von dem Gehäuse 18 gebildet, das als Rohr ausgestaltet ist, dessen Längsrichtung vertikal verläuft. Es ist innen und außen zweckmäßigerweise kreiszylindrisch. Sein unterer stirnseitiger Endbereich trägt den Arbeitskopf 11, der das Gehäuse 18 dabei gleichzeitig an der einen Stirnseite verschließt.

Das Führungsteil 17 ist am Lagerungsteil 10 in Höhenrichtung 16 verstellbar gelagert. Zu diesem Zweck sind an der in die erste Koordinatenrichtung weisenden Vorderseite des Lagerungsteils 10 Lagerungsmittel 19 vorgesehen, die auf den Außenumfang des Führungsteils 17 einwirken. Es handelt sich vorwiegend um zwei in Höhenrichtung 16 beabstandet angeordnete Wälzlagereinheiten mit insbesondere kugelförmigen Lagerungselementen, welche das Führungsteil 17 umschließen. Die Führung ist sehr leichtgängig, und das Führungsteil 17 läßt sich äußerst reibungsarm an den Lagerungsmitteln 19 geführt anheben und absenken.

Die Haltevorrichtung 1 verfügt des weiteren über ein Halteteil 20. Dieses nimmt letztlich die Gewichtskraft der verstellbaren aus Führungsteil 17 und Arbeitskopf 11 bestehenden Einheit auf. Ihm gegenüber stützt sich diese Einheit auch vertikal ab, wenn sie in einer bestimmten Höhenlage positioniert wird.

Das Halteteil 20 besitzt eine als Abschlußwand 21 bezeichnete Partie, die im Innern eines im Führungsteil 17 ausgebildeten Verstellraumes 22 angeordnet ist. Letzterer erstreckt sich in Verstellrichtung 16 mit zweckmäßigerweise konstantem Querschnitt vorzugsweise über die gesamte Länge des Gehäuses 18.

Die Abschlußwand 21 unterteilt den Verstellraum 22 in einen oberen und einen unteren Raumabschnitt. Der obere, nachfolgend als Abstützraum 23 bezeichnete Raumabschnitt ist hierbei an der der Abschlußwand 21 entgegengesetzten oberen Stirnseite von einer gehäusefesten Wand 24 begrenzt. Ein an der Abschlußwand 21 angeordnetes, ebenfalls zum Halteteil 20 gehörendes Verbindungselement, insbesondere in Gestalt einer Verbindungsstange 25, erstreckt sich ausgehend von der Abschlußwand 21 axial durch den Abstützraum 23 und durchdringt die gehäusefeste Wand 24 durch eine Durchbrechung 29 hindurch nach außen. Der außerhalb des Gehäuses 18 angeordnete Stangenabschnitt 30 ist insbesondere mit seinem Endbereich an einer Halterung 31 befestigt, die maschinenfest und beim Ausführungsbeispiel am Lagerungsteil 10 angebracht ist. Lagerungsteil 10, Halterung 31 und das aus der Verbindungsstange 25 und der Abschlußwand 21 bestehende Halteteil 20 stellen mithin eine starre Einheit dar. Bei Bedarf kann der Stangenabschnitt 30 an der Halterung 31 höhenverstellbar angebracht sein.

Beim Ausführungsbeispiel hat die Abschlußwand 21 die Gestalt eines Kolbens, während die Verbindungsstange 25 nach Art einer Kolbenstange ausgebildet ist. Das Führungsteil 17 bildet entsprechend einen Zylinder mit vom Verstellraum 22 gebildetem Zylinderraum.

Das Führungsteil 17 ist gegenüber dem Halteteil 20 in Höhenrichtung 16 verstellbar. Während der Verstellbewegung führt das Führungsteil 17 gegenüber der Abschlußwand 21 eine Relativbewegung in Axialrichtung aus. Im Rahmen einer solchen Bewegung ändert sich das Volumen des zwischen der umfangsseitigen Wand des Führungsteils 17, der Abschlußwand 21 und der gehäusefesten Wand 24 eingeschlossenen Abstützraumes 23. Die Volumenänderung basiert auf einer Längenänderung.

Es ist nun vorgesehen, daß der Abstützraum 23 während des Betriebs der Haltevorrichtung dauernd in Verbindung mit einer schematisch angedeuteten Druckmittelquelle 32 steht. Letztere sorgt praktisch immer für gleichmäßige Füllung und insbesondere gleichmäßigen Druck im Abstützraum 23.

Das darin eingeschlossene Druckmittel stellt ein Abstützmedium dar, über das das Führungsteil 17 gegenüber dem Halteteil 20 in Vertikalrichtung abgestützt ist. Während die Gewichtskraft den Arbeitskopf 11 mit dem Führungsteil 17 nach unten zu ziehen versucht, wirkt das im Abstützraum 23 einerseits gegen die Abschlußwand 21 und andererseits gegen die gehäusefeste Wand 24 arbeitende Abstützmedium in entgegengesetzte Richtung. Wenn der im Abstützraum 23 herrschende Druck zumindest im wesentlichen unter Berücksichtigung der Flächenverhältnisse der das Führungsteil 17 beaufschlagenden Kraft entspricht, befindet sich die aus Führungsteil 17 und Arbeitskopf 11 bestehende Einheit im vertikalen Gleichgewicht.

Zusätzlich ist nun vorgesehen, daß im Umfangsbereich der Abschlußwand 21 zwischen dieser und der sie umgebenden Partie des Gehäuses 18 ein in Umfangsrichtung mit Bezug zur Axialrichtung umlaufender Druckmittel-Durchlaßspalt 33 vorhanden ist. Durch diesen kann laufend Druckmittel aus dem Abstützraum 23 in den unteren Raumabschnitt überströmen, der einen Entlastungsraum 34 bildet. Das in diesem herrschende Druckniveau ist zumindest beim Abwärtsbewegen des Führungsteils 17 niedriger als dasjenige des Abstützraumes 23. Der Druckmittel-Durchlaßspalt 33 wirkt drosselnd, der gemäß den eingezeichneten Pfeilen 35 überströmende Volumenstrom ist relativ gering.

Vorzugsweise herrscht im Entlastungsraum 34 Atmosphärendruck, er steht beim Ausführungsbeispiel über eine oder mehrere Durchbrechungen 26 der Wand des Gehäuses 18 im unteren stirnseitigen Endbereich in dauernder Verbindung mit der Umgebung.

Der Druckmittel-Durchlaßspalt 33 bewirkt, daß sich die Abschlußwand 21 und die umgebende Wand des Gehäuses 18 in jedweder Verschiebestellung praktisch berührungslos gegenüberliegen. Mangels Reibung läßt sich deshalb das Führungsteil 17 besonders leicht verschieben.

Zum Ausschalten von Reibungskräften ist zweckmäßigerweise weiterhin vorgesehen, daß auch die Verbindungsstange 25 mit ringsum vorhandenem Spiel durch die Durchbrechung 29 hindurchgeführt ist. Somit liegt auch in diesem Durchdringungsbereich ein sich über den Umfang der Verbindungsstange 25 erstreckender Durchlaßspalt 36 für Druckmittel vor, welches gemäß Pfeil 37 an die Umgebung abströmen kann. Auch hier ist jedoch die Spaltbreite minimal, so daß eine große Drosselungswirkung entsteht und Druckmittel nur in geringem Umfange ausströmt. Gewährleistet ist jedoch eine leichtgängige Bewegung des Führungsteils 17 gegenüber der Verbindungsstange 25.

Mangels berührend arbeitender Dichtungen im Bereich der Durchlaßspalte 33,36 ist ein Anhaften der relativ zueinander bewegbaren Teile ausgeschlossen, so daß auch zu Beginn einer Bewegung des Führungsteils 17 ein feinfühliges, präzises Positionieren möglich ist. Die seitliche Lagestabilisierung des Arbeitskopfes 11 übernehmen die Lagerungsmittel 19.

Durch laufende Zufuhr einer geeigneten Menge von Druckmittel in den Abstützraum 23 unter Berücksichtigung des durch die Spalte 33,36 jeweils ausströmenden Volumenanteils läßt sich im Abstützraum 23 ein stabiles Druckniveau einstellen, das eine stabile Gleichgewichtslage von Führungsteil 17 und Arbeitskopf 11 bewirkt. Zur Abstimmung des Abstützraumdruckes an die führungsteilseitigen Gewichtsverhältnisse ist zweckmäßigerweise in die Druckmittelverbindung zwischen der Druckmittelquelle 32 und den Abstützraum 23 eine einstellbare Drosseleinrichtung 38 zwischengeschaltet, gegebenenfalls ist auch die Einschaltung eines Druckminderers möglich.

Die Druckmittelzufuhr erfolgt beim Ausführungsbeispiel gemäß Fig. 1 über die hohl ausgebildete Verbindungsstange 25, die im Innern einen in Längsrichtung verlaufenden Kanal 39 besitzt. Dieser mündet an der oberen Stangenstirnseite 40 aus, wo eine geeignete Druckmittelleitung 44, ein Druckmittelschlauch od.dgl. angeschlossen ist, der die Verbindung zur Druckmittelquelle 32 herstellt. In diese Druckmittelleitung ist dann zweckmäßigerweise die Drosseleinrichtung 38 eingebaut. Der Kanal 39 geht zweckmäßigerweise bis zur Abschlußwand 21 durch, in deren Bereich er über eine oder mehrere seitliche Stangenöffnungen 45 mit dem Abstützraum 23 kommuniziert. Das Druckmittel strömt deshalb den Pfeilen 46 folgend über die Leitung 44, den Kanal 39 und die Stangenöffnung 45 in den Abstützraum 23.

Wird das Führungsteil 17 im Laufe der Abtastung der Oberfläche 15 nach unten bewegt, so verringert sich das Volumen des Abstützraumes 23. Dabei wird überschüssiges Druckmedium über die Spalte 33,36 nach außen gedrückt. Um jedoch insbesondere bei schnellen Abwärtsbewegungen eine kurzzeitige, zu starke Kompression des Abstützraumvolumens zu verhindern, ist an den Abstützraum 23 vorzugsweise ein Überdruckventil 47 angeschlossen, das bei Erreichen einer bestimmten oberen Druckschwelle öffnet und ein Ausströmen von Druckmittel aus dem Abstützraum 23 gestattet. Bei wieder sinkendem Druck infolge reduzierter Bewegungsgeschwindigkeit des Führungsteils 17 schließt das Überdruckventil 47 wieder, so daß mithin auch während der Abwärtsbewegung im Abstützraum 23 im wesentlichen immer die gleichen Verhältnisse herrschen.

Für den Fall einer insbesondere raschen Volumenvergrößerung des Abstützraumes 23, bedingt durch ein Anheben des Arbeitskopfes 11, ist es zweckmäßig, wenn der Abstützraum 23 wie beim Ausführungsbeispiel mit einem Druckspeicher 48 in Verbindung steht, der ein großes Druckmittelvolumen enthält. Er ist z.B. an die Druckmittelleitung 44 angeschlossen, insbesondere im Bereich zwischen der Drosseleinrichtung 38 und dem Abstützraum 23. Der Druckspeicher 48 gleicht einen eventuellen Druckmittelmangel aus, der bei Vergrößerung des Abstützraumvolumens wegen der über die Drosseleinrichtung 38 voreingestellten Druckmittel-Zuflußmenge entstehen kann. Sofern eine druckabhängige Regelung der Drosseleinrichtung 38 erfolgt, kann unter Umständen auf einen Druckspeicher 48 auch verzichtet werden.

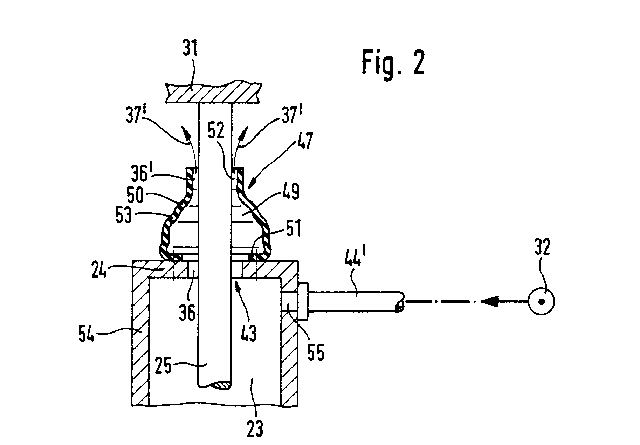

Während beim Ausführungsbeispiel gemäß Fig. 1 das Überdruckventil 47 in oder an der Seitenwand des Gehäuses 18 angeordnet ist, befindet es sich beim Ausführungsbeispiel gemäß Fig. 2 in dem Durchdringungsbereich 43 von Verbindungsstange 25 und gehäusefester Wand 24 außen an letzterer angeordnet. Hier kann der Durchlaßspalt 36 durchaus größeren Querschnitt haben, weil sich an ihm an der dem Abstützraum 23 entgegengesetzten Seite der gehäusefesten Wand 24 ein weiterer Druckmittel-Aufnahmeraum 49 anschließt. Dieser befindet sich im Innern einer z.B. balgförmigen Manschette 50, die mit ihrem einen axialen Endbereich 51 den Durchlaßspalt 36 umgebend dicht an der Wand 24 befestigt ist. An ihrer entgegengesetzten Stirnseite verfügt sie über eine Ausblasöffnung 52, durch die die Verbindungsstange 25 hindurchgeht. Dazwischen erstreckt sich die Manschettenwand 53 rings um einen sich an den Spalt 36 anschließenden Stangenabschnitt, wobei der Manschettenquerschnitt in Richtung zur Ausblasöffnung 52 zweckmäßigerweise abnimmt. Es handelt sich um eine Manschette mit wenigstens im Bereich der Ausblasöffnung 52 gummielastischen Eigenschaften, so daß die Ausblasöffnung 52 in der Lage ist, bei Innendruckbeaufschlagung sich aufzuweiten.

Bevorzugt befindet sich nun ein geringfügiger umlaufender Druckmittel-Durchlaßspalt 36' im Bereich der Ausblasöffnung 52 zwischen der Verbindungsstange 25 und dem umgebenden Manschettenwandbereich. Dort kann gemäß Pfeil 37' im Betrieb vorzugsweise dauernd ein gewisser Volumenstrom ausströmen, vergleichbar mit der Ausströmung 37 beim Ausführungsbeispiel gemäß Fig. 1. Verbunden hiermit ist wiederum eine praktisch vollständige Reibungsfreiheit zwischen Verbindungsstange 25 und Manschette 50. Steigt nun der Druck im Abstützraum 23 an, so stellt sich über den Spalt 36 auch im Aufnahmeraum 49 eine Druckerhöhung ein, die ein Aufweiten der Manschette 50 im Bereich der Ausblasöffnung 52 bewirkt, so daß Druckmittel in größerem Umfange ausströmen kann. Die Manschette 50 arbeitet also im Bereich der Ausblasöffnung 52 nach Art eines Überdruckventils.

In Fig. 2 ist außerdem eine Variante angedeutet, bei der die Verbindungsstange 25 keinen Strömungskanal enthält und die Druckmittelzufuhr über eine entsprechende Leitung 44' und über eine Öffnung 55 in der Gehäusewand 54 erfolgt.

Abschließend sei bemerkt, daß die Anordnung auch derart umgekehrt getroffen sein kann, daß die Anordnung aus Gehäuse 18, Abschlußwand 21 und Verbindungsstange 25 um 180° gedreht ist. In diesem Falle bildet das Gehäuse 18 das Halteteil, und die Abschlußwand 21 stellt mit der nach unten herausragenden Verbindungsstange 25 das den Arbeitskopf 11 tragende Führungsteil dar. Die Stabilität ist jedoch bei der beschriebenen Ausführungsform besser.

In Verbindung mit der verwendeten Mehrkoordinatenmaschine 2 ist noch zu bemerken, daß deren eine Führungsbahn für den Schlitten 8 darstellender Querträger 7 vorzugsweise so hoch angeordnet ist, daß unten hindurchgegangen werden kann. Zu den drei beschriebenen Koordinaten können zusätzlich noch weitere Achsen bzw. Drehachsen vorhanden sein. Soll mit der Mehrkoordinatenmaschine 2 eine Meßwertaufnahme erfolgen, die in ein Programm für eine Arbeitsmaschine integriert werden soll, dann stimmt die Achsanordnung zweckmäßigerweise mit derjenigen dieser Arbeitsmaschine überein. Man erhält über die Haltevorrichtung 1 in der Z-Achse eine praktisch berührungslose und mithin reibungslose Aufhängung bei gleichzeitiger Gewichtsentlastung. Es sind verschiedene Arbeitsköpfe 11 auswechselbar anbringbar, die den Arbeitsköpfen der späteren Arbeitsmaschine vorzugsweise entsprechen.

**Patentansprüche**

1. Haltevorrichtung für einen insbesondere als Abtastkopf ausgebildeten, anhebbaren und absenkbaren Arbeitskopf, dadurch gekennzeichnet, daß ein Halteteil (20) vorhanden ist, an dem sich ein höhenverstellbares Führungsteil (17) zum Erhalt stabiler Höhenlagen abstützen kann, von dem der Arbeitskopf (11) in Gebrauchsstellung getragen wird, daß eines der beiden Teile (20,17) ein Gehäuse (18) umfaßt, das einen sich in Verstellrichtung (16) erstreckenden Abstützraum (23) enthält, der mit als Abstützmedium dienendem Druckmittel befüllbar ist und einerseits von einer gehäusefesten Wand (24) und andererseits von einer Abschlußwand (21) begrenzt wird, wobei die Abschlußwand (21) Bestandteil des anderen Teils (17,20) ist und von einer den Abstützraum (23) und die gehäusefeste Wand (24) durchdringenden Verbindungsstange (25) getragen wird, deren aus dem Gehäuse (18) herausragender Stangenabschnitt (30) zur Verbindung mit dem Arbeitskopf (11) oder einer Halterung (31) dient, und wobei durch in Verstellrichtung (16) erfolgende Relativbewegung zwischen den beiden Teilen (17,20) eine Längen- und Volumenänderung des ständig mit einer Druckmittelquelle (32) kommunizierenden Abstützraumes (23) stattfindet, und daß im Bereich zwischen der Abschlußwand (21) und der diese seitlich umgebenden Gehäusepartie ein umlaufender, drosselnd wirkender Druckmittel-Durchlaßspalt (33) vorhanden ist.

2. Haltevorrichtung nach Anspruch 1, dadurch gekennzeichnet, daß die Verbindungsstange (25) an der Oberseite des Gehäuses (18) nach oben herausragt, dort an einer Halterung (31) festgelegt ist und mit der Abschlußwand (21) das Halteteil bildet, während an dem das Gehäuse (18) umfassenden Führungsteil (17) der Arbeitskopf (11) anbringbar ist.

3. Haltevorrichtung nach Anspruch 1 oder 2, dadurch gekennzeichnet, daß in die Druckmittelverbindung (44,30,45) zwischen Druckmittelquelle (32) und Abstützraum (23) eine insbesondere einstellbare Drosseleinrichtung (38) zwischengeschaltet ist.

4. Haltevorrichtung nach einem der Ansprüche 1 bis 3, dadurch gekennzeichnet, daß der Abstützraum (23) insbesondere parallel zur Druckmittelquelle (32) mit einem Druckspeicher (48) in Verbindung steht.

5. Haltevorrichtung nach einem der Ansprüche 1 bis 4, dadurch gekennzeichnet, daß der Abstützraum (23) an ein insbesondere einstellbares Überdruckventil (47) angeschlossen ist, das bei Erreichen eines bestimmten Druckes im Abstützraum (23) öffnet.

6. Haltevorrichtung nach Anspruch 5, dadurch gekennzeichnet, daß ein Überdruckventil (47) dem Durchdringungsbereich (43) von Verbindungsstange (25) und gehäusefester Wand (24) zugeordnet ist.

7. Haltevorrichtung nach Anspruch 6, dadurch gekennzeichnet, daß an der gehäusefesten Wand (24) im unabgedichteten Durchdringungsbereich (43) der Verbindungsstange (25) außen eine z.B. balgförmige Manschette (50) festgelegt ist, die eine von der Verbindungsstange (25) durchdrungene Ausblasöffnung (52) aufweist, die in der Lage ist, sich bei bestimmtem, im Manschettenraum (49) herrschendem Druck elastisch aufzuweiten.

8. Haltevorrichtung nach einem der Ansprüche 1 bis 7, dadurch gekennzeichnet, daß die Verbindungsstange (25) mit Spiel durch die gehäusefeste Wand (24) hindurchgeführt ist, derart, daß ein Druckmittel-Durchlaßspalt (36) vorliegt.

9. Haltevorrichtung nach einem der Ansprüche 1 bis 8, dadurch gekennzeichnet, daß das Druckmittel durch die einen entsprechenden Kanal (39) enthaltende und zweckmäßigerweise zumindest teilweise hohl ausgebildete Verbindungsstange (25) in den Abstützraum (23) zugeführt wird.

10. Haltevorrichtung nach einem der Ansprüche 1 bis 9, dadurch gekennzeichnet, daß das ein Gehäuse (18) umfassende Teil (17) als Rohr ausgebildet ist.

11. Haltevorrichtung nach einem der Ansprüche 1 bis 10, dadurch gekennzeichnet, daß die Abschlußwand (21) in einem sich in Verstellrichtung (16) insbesondere vertikal erstreckenden Verstellraum (22) angeordnet ist, den sie in zwei Raumabschnitte unterteilt, deren einer den Abstützraum (23) bildet, der mit dem anderen, einen Entlastungsraum (34) bildenden Raumabschnitt über den Druckmittel-Durchlaßspalt (36) im Bereich der Abschlußwand (21) kommuniziert, wobei der Entlastungsraum (34) im Betrieb ein gegenüber dem Abstützraum (23) geringeres Druckniveau aufweist und insbesondere mit der Umgebung bzw. Atmosphäre in Verbindung steht.

12. Haltevorrichtung nach einem der Ansprüche 1 bis 11, dadurch gekennzeichnet, daß das Führungsteil (17) am Außenumfang in Verstellrichtung bewegbar gelagert ist, z.B. über geeignete Lagerungsmittel (19).

Fig. 1

Fig. 2

**Europäisches Patentamt**

# EUROPÄISCHER RECHERCHENBERICHT

Nummer der Anmeldung

## EP 91 11 2086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-296 090 (WATERBURY) <br> * Seite 1, Zeilen 41-50; Seite 2, Zeilen 6-28; Figuren 1-4,7,8 * | 1-4,9,10 | B 23 Q 5/26 <br> F 16 F 9/02 |
| A | | 12 | |
| | – – – | | |
| Y | GB-A-1 109 355 (MONROE) <br> * Seite 1, Zeilen 74-84; Figur * | 1-4,9,10 | |
| | – – – | | |
| Y | DE-A-2 951 062 (LENSING) <br> * Ansprüche 1-5; Seite 7, Zeilen 3-22; Seite 7, Zeile 29 - Seite 8, Zeile 7; Seite 8, Zeile 25 - Seite 9, Zeile 3; Figur * | 1,3,4, 9-12 | |
| | – – – | | |
| Y | US-A-2 791 066 (RAYMOND) <br> * Spalte 4, Zeile 66 - Spalte 5, Zeile 29; Figuren 1,4,8 * | 1,3,4, 9-12 | |
| A | | 2 | |
| | – – – | | |
| A | US-A-3 342 396 (MILLER) <br> * Spalte 2, Zeilen 7-39; Figuren 1-3 * | 1 | |
| | – – – | | |
| A | JP-A-61 188 064 (OLYMPUS) <br> * Figur 1 * | 1 | |
| | – – – | | RECHERCHIERTE SACHGEBIETE (Int. Cl.5) |
| A | DE-B-1 019 143 (BURKHARDT) | | |
| | – – – | | B 23 Q |
| A | FR-A-2 133 085 (R.T.C.) | | F 16 F <br> F 16 B |
| | – – – – – | | |

Der vorliegende Recherchenbericht wurde für alle Patentansprüche erstellt

| Recherchenort | Abschlußdatum der Recherche | Prüfer |
|---|---|---|
| Den Haag | 03 Oktober 91 | LJUNGBERG R.N. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

------------------------------------------------------

& : Mitglied der gleichen Patentfamilie, übereinstimmendes Dokument